# EUROPÄISCHE PATENTANMELDUNG

(11) **EP 2 348 295 A2**
(43) Veröffentlichungstag der Anmeldung: **27.07.2011**
(21) Anmeldenummer: 11000108.8
(22) Anmeldetag: 08.01.2011
(51) Int. Cl.: G01L 1/26

(54) **Druckkraftmesseinrichtung**

(30) Priorität: 25.01.2010 DE 102010005792
(71) Anmelder: Innovations- Transfert Uphoff GmbH & Co. KG, 35039 Marburg an der Lahn (DE)
(72) Erfinder: Schneider, Hans-Walter, 35085 Ebsdorfergrund (DE)
(74) Vertreter: von Bülow, Tam

(57) **Zusammenfassung**

Die Druckkraftmesseinrichtung mit einem Druck/- Spannungs-Wandler (2) in Chiptechnologie weist eine kugelkalottenförmige Sensorfläche (2) auf. Der Druck/- Spannungs-Wandler (2) ist zwischen einer Basisscheibe (5) und einer Deckscheibe (6) angeordnet, wobei die Basisscheibe (5) und die Deckscheibe (6) durch Federn (8) mit im Wesentlichen identischer Zugkraft gegeneinander verspannt sind. Zwischen dem Druck/SpannungsWandler (2) und der Deckscheibe (6) ist eine Justierscheibe (7) angeordnet, die eine an die kugelkalottenförmige Sensorfläche (2) angepasste Vertiefung (9) aufweist, die mit der Sensorfläche in Berührung steht. Auf die Deckscheibe einwirkende Kräfte bewirken, dass sich die Deckscheibe stets senkrecht zur Kraftrichtung einstellt, wodurch einige der Federn (8) zusätzlich belastet und andere entlastet werden und dadurch eine Kompensation von schräg auf die Druckkraftmesseinrichtung wirkenden Kräften erfolgt.

## Beschreibung

Die Erfindung bezieht sich auf eine Druckkraftmesseinrichtung mit einem Druck/Spannungs-Wandler in Chiptechnologie gemäß dem Oberbegriff des Patentanspruches 1.

Eine solche Druckmesseinrichtung ist beispielsweise durch einen Druckkraftsensor der Firma Sensortechnics GmbH, Boschstraße 10, 82178 Puchheim unter der Typenbezeichnung RFU-E-11710 bekannt.

In verschiedenen Bereichen der Technik ist die Messung von Kräften und Drücken erforderlich.

Ein spezielles Gebiet, für das die Erfindung bevorzugt konzipiert ist, ist die Medizintechnik und dort die Messung des auf der Haut eines Patienten auftretenden Druckes bei Anlegen eines Verbandes, der beispielsweise bei der Lymphtherapie angewandt wird.

Bei der Lymphtherapie an einem Bein eines Patienten wird ein Druckverband aufgebracht, der so zu wickeln ist, dass der Druck vom Fußende her in Richtung zum Knie oder Oberschenkel abnimmt. Analoges gilt für Druckverbände an einem Arm. Das solche Verbände anlegende medizinische Personal wird hierfür an Modellen geschult, wobei der jeweilige Druck an verschiedenen Stellen gemessen wird.

Bisher wurden hierfür pneumatische Druckaufnehmer mit ballonähnlichen Kunststoffbeuteln verwendet, an welchen zur Druckmessung ein Verbindungsschlauch zu einem barischen Messgerät angebracht war. Neben der Tatsache, daß solche ballonähnlichen Kunststoffbeutel und zu einem barischen Messgerät führende Verbindungsschläuche aufgrund ihrer Baugröße unhandlich sind, lässt auch die Messgenauigkeit aufgrund unterschiedlicher Füllvolumina der mit Luft gefüllten Kunststoffbeutel zu wünschen übrig.

Es bietet sich daher an, modernere Druckspannungswandler in Chiptechnologie einzusetzen, die heute bei sehr geringer Baugröße (z.B. Grundfläche < 10mm² und Höhe < 4mm) sehr genaue und einfach auszuwertende elektrische Signale liefern.

Ein Problem ist jedoch, dass solche Druck/SpannungsWandler in Chiptechnologie nur senkrecht auf eine Sensorfläche einwirkende Kräfte registrieren, was für viele Anwendungszwecke nicht ausreichend ist, wie z.B. für die oben geschilderten Messaufgaben bei der Lymphdrainage. In der Lymphdrainage haben die textilen Bandagen im gespannten Zustand lochartige Vertiefungen zwischen den Webfäden, so dass sich die sehr kleine kugelkalottenförmige Sensor-Messfläche in einer derartigen Vertiefung befinden können und so einen falsch geringer Druck detektiert würde.

Ähnliche Probleme treten auch bei der Bewertung von Druckkräften an Rollstühlen, Stühlen, Autositzen, Operationsliegen, Krankenbetten auf, wo beispielsweise die Beanspruchung von Rücken, Gesäß, Beinen, Armen etc. einer Person gemessen werden sollen, wobei die auf den Druck/Spannungs-Wandler wirkenden Kräfte unterschiedliche Richtungen haben. Auch von diesen Kräften sollen die senkrechten Komponenten sicher gemessen werden.

Aufgabe der Erfindung ist es daher, eine Druckmesseinrichtung mit einem Druck/Spannungs-Wandler in Chiptechnologie zu schaffen, der eine Messfläche beinhaltet, welche alle aus unterschiedlichen Richtungen auf den Sensor einwirkenden senkrechten Kraftkomponenten mißt.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Erfindung geht von einem Druck/Spannungs-Wandler in Chiptechnologie aus, der eine kugelkalottenförmige Sensorfläche aufweist. Zur Lösung der obigen Aufgabe schlägt die Erfindung vor, dass der Druck/SpannungsWandler zwischen einer Basisscheibe und einer Deckscheibe angeordnet ist. Die Basisscheibe und die Deckscheibe werden durch Federn gegeneinander verspannt. Auf den Druck/Spannungs-Wandler wirkt damit eine Vorspannungskraft. Zwischen dem Druck/SpannungsWandler und der Deckscheibe ist eine Justierscheibe angeordnet, die eine an die kugelkalottenförmige Sensorfläche angepasste Vertiefung aufweist, mit der die Sensorfläche in Berührung steht. Die Deckscheibe kann somit um den Kreismittelpunkt der kugelkalottenförmigen Sensorfläche in beliebigen Richtungen gekippt werden und stellt sich damit auch bei außermittig auf die Deckscheibe einwirkenden Kräften stets senkrecht zur einwirkenden Kraft ein. Dabei werden einige der Federn entlastet und andere belastet, so dass Abweichungen auftretender Kräfte von der kleinen Messfläche des Sensors kompensiert werden. Der Druck/- Spannungs-Wandler ist damit in der Lage, alle senkrecht zur kugelkalottenförmigen Sensorfläche auftretenden senkrechten Kräfte zu messen und nicht nur die Kraftkomponenten, die unmittelbar senkrecht zur Schnittebene der Kugelkalotte auftreten.

Da die Federn zwischen Basisscheibe und Deckscheibe Herstellungstoleranzen unterliegen, muss dafür gesorgt werden, dass der Druck/Spannungs-Wandler so zwischen den beiden Scheiben angeordnet ist, dass alle Federn exakt gleich belastet sind. Nach einer Weiterbildung der Erfindung ist daher vorgesehen, dass die Justierscheibe und der Druck/Spannungs-Wandler relativ zur Basisscheibe und zur Deckscheibe verschieblich sind.

Um dies in einfacher Weise durchführen zu können, haben die Deckscheibe und die Basisscheibe jeweils eine Öffnung, durch welche hindurch das Verschieben mit einem Werkzeug möglich ist.

Nach einer Kalibrierung, d.h. Ausrichtung von Justierscheibe und Druck/Spannungs-Wandler, derart, dass alle Federn gleich belastet sind, wird die Justierscheibe an der Deckscheibe und der Druck/- Spannungs-Wandler an der Basisscheibe befestigt, beispielsweise durch Ankleben.

Die Federn zwischen Deckscheibe und Basisscheibe sind jeweils im äußeren Randbereich dieser Scheiben angeordnet, wobei mindestens drei Federn vorhanden sind. Bevorzugt sind allerdings vier Federn. Auch eine größere Anzahl von Federn ist möglich. Die Federn sind in äquidistanten Abständen rings um den Rand von Basis- und Deckscheibe verteilt angeordnet.

Durch Vorauswahl der Kraft der Federn können unterschiedliche Vorspannungen auf den Druck/SpannungsWandler ausgeübt werden.

Elektrische Anschlüsse des Druck/Spannungs-Wandlers können mittels Kabelverbindungen seitlich oder durch weitere Öffnungen in der Basisplatte nach unten herausgeführt werden.

Werden die elektrischen Anschlüsse des Druck/- Spannungs-Wandlers durch eine oder mehrere Bohrungen durch die Basisplatte hindurch nach unten herausgeführt, so können sie an einer die Basisplatte aufnehmenden Halterung durch Klebung, Bajonettverschluss, Verschraubung oder Verpressung fixiert werden.

Im Folgenden wird die Erfindung anhand eines Ausführungsbeispieles im Zusammenhang mit der Zeichnung ausführlicher erläutert. Es zeigt:
- Fig. 1: Eine schematische Seitenansicht einer Druckkraftmesseinrichtung nach einem Ausführungsbeispiel der Erfindung;
- Fig. 2: eine Seitenansicht der Druckkraftmesseinrichtung ähnlich Fig. 1 bei unter einem Winkel einwirkenden Kräften;
- Fig. 3: eine Draufsicht auf die Druckkraftmesseinrichtung der Fig. 1;
- Fig. 4: eine Draufsicht auf die Deckscheibe der Druckkraftmesseinrichtung mit nach rechts und unten verschobener Justierscheibe;
- Fig. 5: einen Querschnitt der bei der Erfindung verwendeten Justierscheibe.

Die in ihrer Gesamtheit mit dem Bezugszeichen 1 bezeichnete Druckkraftmesseinrichtung hat einen Druck/Spannungs-Wandler 2 in Chiptechnologie, der eine kugelkalottenförmige Sensorfläche 3 aufweist. Eine auf diese Sensorfläche 3 einwirkende mechanische Druckkraft F wird von dem Druck/Spannungs-Wandler in ein elektrisches Ausgangssignal umgewandelt, das der auf die Sensorfläche wirkenden Kraft F proportional ist, wobei dieses elektrische Signal über elektrische Anschlüsse 4 ausgegeben wird und zu einem nicht dargestellten Anzeige- oder Auswertegerät über nicht dargestellte elektrische Leitungen übertragen wird.

Der Druck/Spannungs-Wandler 2 ist zwischen einer Basisscheibe 5 und einer Deckscheibe 6 angeordnet, wobei diese beiden Scheiben 5 und 6 durch mehrere Federn 8 gegeneinander verspannt sind. Die Federn 4 sind also Zugfedern, mittels denen eine Vorspannung auf die Sensorfläche 3 aufgebracht wird.

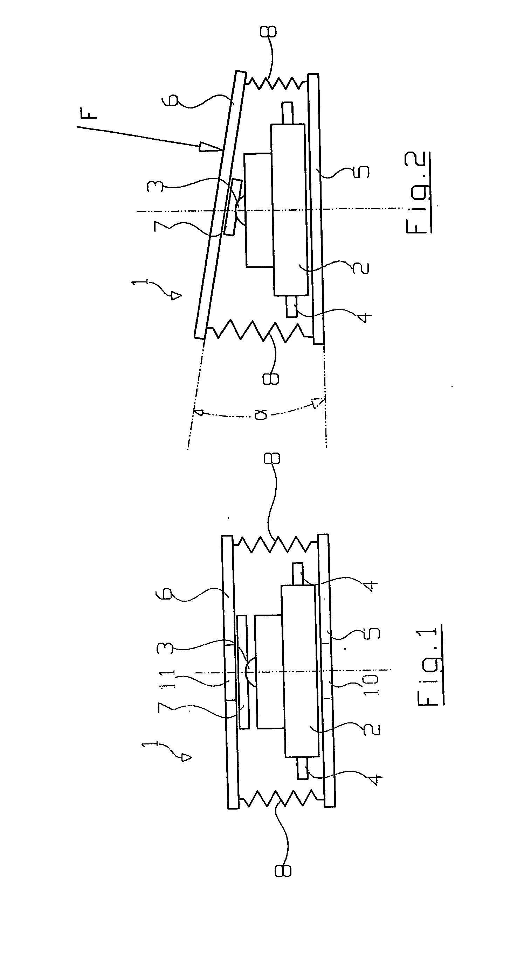

Zwischen dem Druck/Spannungs-Wandler 2 und der Deckscheibe 6 ist noch eine Justierscheibe 7 angeordnet, die eine kugelkalottenförmige Ausnehmung 9 aufweist, die an die kugelkalottenförmige Sensorfläche 3 angepasst ist. Die Justierscheibe 7 ist so angeordnet, dass die Sensorfläche 3 in die Ausnehmung 9 eingreift. Aufgrund der Kugelkalottenform der Sensorfläche 3 und der Ausnehmung 9 kann die Deckscheibe 6 somit gegenüber dem Druck/Spannungs-Wandler 2 und gegenüber der Basisscheibe 5 gekippt werden bzw. pendeln, wie in Fig. 2 dargestellt. Der mögliche Kippwinkel α ist durch die Geometrie der Sensorfläche und der Justierscheibe begrenzt, dadurch, dass eine Kante der Justierscheibe 7 auf einer Oberseite des Druck/- Spannungs-Wandlers 2 oder der Basisscheibe 5 zur Anlage kommt .

In einem konkreten Ausführungsbeispiel hat die Justierscheibe eine Dicke von 0,5mm und eine Längserstreckung von 7,0mm. Die Deckscheibe und die Basisscheibe haben jeweils eine Dicke von 0,8mm. Die gesamte Bauhöhe von der Unterseite der Basisscheibe bis zur Oberseite der Deckscheibe beträgt 5,68mm. Damit lassen sich etwa Kippwinkel von 20° realisieren, was für die eingangs genannten Anwendungsbereiche in der Medizintechnik ausreichend ist. Durch entsprechende Dimensionierung der einzelnen Elemente lassen sich jedoch auch größere Kippwinkel realisieren.

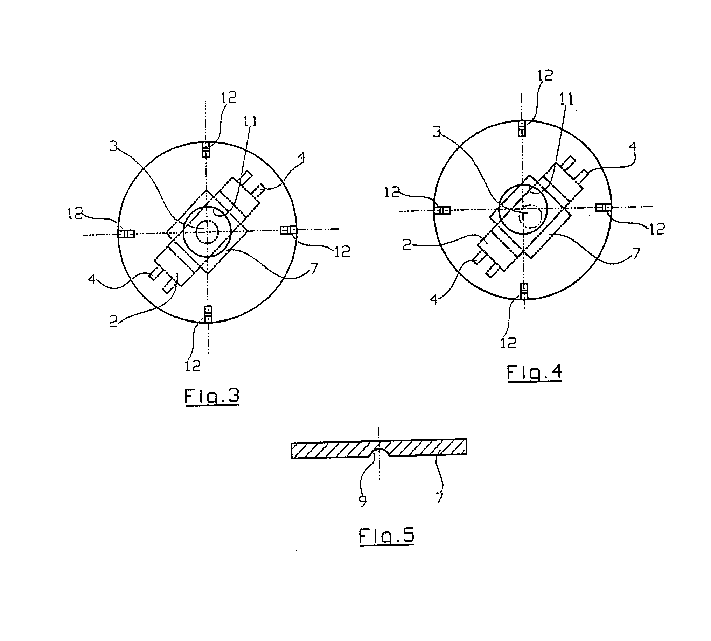

Aus Fig. 3 ist zu erkennen, dass in dem dortigen Ausführungsbeispiel vier Federn in äquidistanten Abständen rings um den Außenbereich der Deckscheibe 6 und der Basisscheibe 5 angeordnet sind, wobei die Federn in Befestigungsöffnungen 12 dieser beiden Scheiben 5 und 6 eingehängt sind.

Da in der Praxis die Federn 8 aufgrund von Herstellungstoleranzen nicht exakt gleich sind, muss eine Justierung vorgenommen werden, was dadurch erfolgt, dass der Druck/Spannungs-Wandler 2 zusammen mit der Justierscheibe 7 relativ zur Basisscheibe 5 und zur Deckscheibe 6 verschoben wird, was in Fig. 4 dargestellt ist. Die Druckkraftmesseinrichtung ist dann justiert, wenn alle Federn die gleiche Kraft ausüben, so dass die Basisscheibe 5 und die Deckscheibe 6 exakt parallel zueinander stehen.

Um dieses Justieren einfach durchführen zu können, hat die Basisscheibe 5 eine in etwa mittige Öffnung 10 und die Deckscheibe 6 eine in etwa mittige Öffnung 11, wobei der Durchmesser der Öffnung 11 kleiner ist als die Justierscheibe 7, damit die Justierscheibe 7 stets mit der zu den Druck/Spannungs-Wandler 2 weisenden Unterseite der Deckscheibe in Berührung steht. Durch die beiden Öffnungen 10 und 11 hindurch kann das Verschieben und damit Justieren durchgeführt werden, wobei nach vollständigem Justieren der Druck/- Spannungs-Wandler 2 mit der Basisscheibe 5 fest verbunden wird, beispielsweise durch Ankleben und ebenso die Justierscheibe 7 mit der Deckscheibe 6.

Fig. 5 zeigt einen Schnitt durch die Justierscheibe 7, bei dem die kugelkalottenförmige Ausnehmung 9 deutlich zu erkennen ist. Die Justierscheibe 7 kann in Draufsicht kreisringförmig sein. Sie kann aber auch, wie in Fig. 3 und 4 angedeutet, rechteckig sein oder eine sonstige beliebige Form haben.

Durch die Wahl der Federn 8 lässt sich auch die Vorspannung, die auf den Druck/Spannungs-Wandler 2 ausgeübt wird, einstellen.

Aufgrund der oben beschriebenen Justierung wird die Position des Druck/Spannungs-Wandlers so verschoben, dass nach Aufbringen jeweils der gleichen Kraft auf alle Punkte der Deckscheibe 6 der Druck/SpannungsWandler jeweils die gleiche Kraft registriert. Wie in Fig. 2 dargestellt, bewirkt eine außermittig auf die Deckscheibe 6 einwirkende Kraft F, ein Verschwenken oder Kippen der Deckscheibe um den Kippwinkel α, wodurch die in Fig. 2 dargestellte linke Feder 8 weiter gespannt wird und damit eine größere Kraft ausübt, während die in Fig. 2 dargestellte rechte Feder 8 zusammengedrückt und damit entlastet wird. Je nach Versatz zwischen Kraftangriffspunkt und Mittelachse 13 ist der Hebelarm zwischen dem Kraftangriffspunkt und dem Drehmittelpunkt unterschiedlich lang und dementsprechend sind auch die von den jeweiligen Federn aufgebrachten Kräfte unterschiedlich groß, so dass sich die Deckscheibe stets senkrecht zur äußeren Kraft stellt und den Druck der äußeren Kraft exakt in Richtung auf den Mittelpunkt der kugelkalottenförmigen Sensorfläche 3 überträgt.

Die durch die Federn 8 bewirkte Vorspannung auf den Druck/Spannungs-Wandler wird messtechnisch permanent registriert und stellt einen wesentlichen Systemvorteil dar. Erfolgt nämlich eine Überschreitung des zulässigen Kippwinkels α, beispielsweise dadurch, dass die Deckscheibe 6 bis auf den Druck/Spannungs-Wandler 2 oder die Basisscheibe 5 "gehebelt" wird, so verringert sich die gemessene Kraft unter den Wert der Vorspannung. Dadurch können fehlerhafte Messbedingungen bereits bei der Datenaufnahme erkannt und noch während einer laufenden Messung frühzeitig eliminiert werden bzw. die Messung kann abgebrochen und wiederholt werden.

## Patentansprüche

1. Druckkraftmesseinrichtung mit einem Druck/- Spannungs-Wandler in Chiptechnologie der eine kugelkalottenförmige Sensorfläche aufweist,
**dadurch gekennzeichnet,**
**dass** der Druck/Spannungs-Wandler (2) zwischen einer Basisscheibe (5) und einer Deckscheibe (6) angeordnet ist,
**dass** die Basisscheibe (5) und die Deckscheibe (6) durch Federn (8) gegeneinander verspannt sind, dass zwischen dem Druck/Spannungs-Wandler (2) und der Deckscheibe (6) eine Justierscheibe (7) angeordnet ist, und
**dass** die Justierscheibe (7) eine an die kugelkalottenförmige Sensorfläche (3) angepaßte Vertiefung (9) aufweist, die mit der Sensorfläche (3) in Berührung steht.

2. Druckkraftmesseinrichtung nach Anspruch 1,
**dadurch gekennzeichnet, dass** die Justierscheibe (7) und der Druck/Spannungs-Wandler (2) relativ zur Basisscheibe (5) und zur Deckscheibe (6) verschieblich sind.

3. Druckkraftmesseinrichtung nach Anspruch 1 oder 2,
**dadurch gekennzeichnet, dass** die Basisscheibe (5) und die Deckscheibe (6) Öffnungen (10, 11) aufweisen.

4. Druckkraftmesseinrichtung nach einem der Ansprüche 1 bis 3, **dadurch gekennzeichnet, dass** die Justierscheibe (7) mit der Deckscheibe (6) und der Druck/Spannungs-Wandler (2) mit der Basisscheibe (5) bei gebrauchfertiger Druckkraftmesseinrichtung fest miteinander verbunden sind.

5. Druckkraftmesseinrichtung nach einem der Ansprüche 1 bis 4, **dadurch gekennzeichnet, dass** die Federn (8) in äquidistanten Abständen rings um den Außenbereich von Basisscheibe (5) und Deckscheibe (6) befestigt sind.

6. Druckkraftmesseinrichtung nach Anspruch 5,
**dadurch gekennzeichnet, dass** vier Federn vorhanden sind.

7. Druckkraftmesseinrichtung nach den Ansprüchen 5 oder 6, **dadurch gekennzeichnet, dass** alle Federn (8) im Wesentlichen dieselbe Zugkraft haben.

8. Druckkraftmesseinrichtung nach einem der Ansprüche 1 bis 7, **dadurch gekennzeichnet, dass** elektrische Anschlüsse (4) des Druck/Spannungs-Wandlers (2) mittels Kabelverbindungen seitlich oder durch Bohrungen in der Basisplatte (5) nach außen herausgeführt sind.

9. Druckkraftmesseinrichtung nach Anspruch 8,
**dadurch gekennzeichnet, dass** elektrische Anschlüsse des Druck/Spannungs-Wandlers (2), die durch die Basisplatte (5) nach unten
herausgeführt sind, in einer die Basisplatte (5) aufnehmenden Halterung durch Klebung, Bajonettverschluss, Schraubung oder Pressung fixiert sind.
